# EUROPEAN PATENT SPECIFICATION

(11) **EP 4 027 802 B1**
(45) Date of publication and mention of the grant of the patent: **01.11.2023**
(21) Application number: 19772796.9
(22) Date of filing: 12.09.2019
(51) Int. Cl.: A23K 50/42, A23K 10/20, A23K 10/30

(54) **DRY PET FOOD MANUFACTURING METHOD**
HERSTELLUNGSVERFAHREN FÜR TROCKENTIERFUTTER
PROCÉDÉ DE FABRICATION D'ALIMENT SEC POUR ANIMAUX DE COMPAGNIE

(30) Priority: 09.09.2019 GB 201912950
(43) Date of publication of application: 20.07.2022
(73) Proprietor: Cambrian Investco Limited, Carmarthen SA31 3BT (GB)
(72) Inventor: DAVIES, Jonathan, Carmarthenshire SA39 9AE (GB)
(74) Representative: Ashton, Gareth Mark
(86) International application number: PCT/GB2019/052555
(87) International publication number: WO 2021/048515

(56) References cited:
- WO-A1-2016/097167
- WO-A1-2016/151440
- WO-A1-2017/220669
- US-A- 4 702 924

## Description

### FIELD OF THE INVENTION

The present invention relates to a method of manufacturing a dry pet food.

### BACKGROUND OF THE INVENTION

Pet foods are available in a multitude of shapes and forms, and their classification into types is not a straightforward task. However it is generally accepted that the easiest, and most widely accepted approach is the system engaged by the Association of American Feed Control Officials (AAFCO) Model Pet Food Regulations. It defines three major categories of pet food by moisture content:
- Less than 20%
- 20% or more but less than 63%; and
- 65% or more

### (AAFCO 2003)

Whilst specific names are not given to these categories in the regulations, they are generally understood to roughly correspond to "dry" (less than 20% moisture), "semi-moist" (20% or more but less than 63%), and "wet" (65% or more, canned, pouch or 'tray) pet foods.

Dry Pet foods are easy to package and store, and have a long shelf life, if stored correctly. There are various means to produce dry pet food, but by far and away the most common is by Extrusion (for example by 'single' or 'twin screw' extruder). In summary, the process is as follows: dry ingredients are mixed in a preconditioner before entering a mechanical cooking extruder. The extruder forces the material along a shaft by means of screw(s), wherein the heat and pressure cook the food along the journey. The heat is generated through a combination of shear and friction forces as the mix passes through the extruder, and this helps gelatinise (i.e. cook) carbohydrates in the mix and allows the binding of the mix together and the formation of a chunk (e.g. a kibble) with structural integrity.

Extrusion is defined as the process of forcing a food / feed material to flow under one or more of a variety of conditions (i.e. mixing, heating and shear) though a die, which is designed to form and / or puff dry the ingredients. Traditional dry pet food extrusion, in other words, combines several unit operations including batching of dry ingredients, particle size reduction (grinding), mixing, cooking, kneading, shearing, shaping and forming. The verb 'extrude' characterises a process of shaping a final product by forcing softened or plasticized material through dies (or holes) by pressure.

The dry ingredients typically include a variety of dried (rendered) powdered meats, cereals such as barley, wheat, rice, other dried carbohydrates such as dried potato, or dried sweet potato and dried vegetables, e.g. peas, carrots, beans. As the extruded material is forced out of the extruder die, various shapes and sizes can be formed by the extrudate being passed through a die plate at pressure and a knife assembly that cuts off the extruded food from the die at frequent, regular intervals, thereby forming individual chunks in whichever shape, and size as determined by the die plate and cutter speed. Further size and form characteristics are determined by the adjustment to the knife assembly. The chunks/pellets are commonly referred to in the art as "kibbles".

The dried powdered meats that are used in the process may in some instances be several weeks or months old due to the nature of their preparation, and these dried powdered meats slowly oxidise and degrade during their storage, as the antioxidants contained therein are gradually depleted over time. The original fresh meat that is used to produce the dried powdered meat may also come from several different sources, and there is typically no visibility and no means, for the pet food manufacturer, of tracking the origin of the source material used to make the dried powdered meat.

The preparation of dry powdered meats as used in dry pet food extrusion cooking typically involves collection by a meat renderer of meat such as chicken, lamb, turkey, beef, pork or fish and their by-products, obtained from various abattoirs or processing plants. These collections are usually streamed by species but may be agglomerated i.e. poultry from different plants (and different kill dates) mixed together. At the renderers the materials from various plants are dewatered, defatted (fat / oil extraction), cooked, pressed, preserved by the addition of antioxidants (synthetic e.g. BHA / BHT or otherwise) and ground into meals (powdered form). It is this meal that is sold to dry pet food manufacturers.

In addition to the quality to and consistency of the material from the original source, collection time (days from kill), the 'cold chain' management, and the rendering processing parameters will have a major impact on the nutritional and palatability quality of the finished meals. Proper handling is also crucial for ensuring the quality of rendered proteins. If the fresh meats and by products are collected or delivered quickly from the meat / fish / poultry processors to the renderers, or if the rendering operation is on the same site or in close proximity the processing plant, then the quality for the starting material will basically be the same as fresh meats. If on the other hand, and as is oftentimes, renderers collect from many disparate processing plants, and trailers may sit for some time, and then spend some hours being transported to the rendering plant, or if the cold chain is not managed correctly then the finished meal will be of lower quality due to potential oxidisation, and /or nutrient loss from bacterial and enzymatic breakdown of the raw meats.

Another factor is how the processing plant or slaughter house adheres to Good Manufacturing Processes (GMP) for that industry. This is why, knowing the source of supply and visiting operations are critically important when maintaining a known level of quality. When dealing with an intermediary i.e. a renderer it is sometimes not possible for a pet food manufacturer to have this complete visibility.

Some dry pet food manufacturers do incorporate the use of meat slurries in the extrusion process. This allows the incorporation of a portion of fresh meat tissues into the formulation, instead of a complete reliance on dry meat meals. But because the inherent moisture level of fresh (i.e. non rendered) meat is much higher at circa 60-80%, there is a physical upper limit to the percentage inclusion of fresh, non-rendered, non-pre-processed meat in this form into a mechanical cooking extrusion procedure. Excessive inherent moisture and inherent fat levels within the fresh meat prevent the formation of a non-friable chunk through a traditional extrusion cooking process. The mechanical cooking extruder was originally designed in the American Mid West in 1948 to cook cereals for animal feed. The fundamental operating principle of the mechanical cooking extruder has not changed, and it was never designed to process 'high meat or `ultra-high meat', without pre-processing the meat with interventions such as dewatering, pre-processing, tricanting, etc., and without the addition of other non-meat ingredients that have so-called 'functional' properties to help bind the mixture together, for example wheat, maize, rice, barley, dried potato starches, and/or cellulose. These non-meat ingredients gelatinise and plasticise, and allow the cooked mix exiting the mechanical extruder to be cut into chunks that hold together rather than fall apart into smaller pieces.
Some dry pet food manufacturers have begun to add fresh meat to their dry pet food manufacturing processes at the preconditioner stage, prior to the extruder. However, above a certain percentage inclusion, fresh meat is required to undergo a tricanting or dewatering process which reduces the oil and water content of the meat, before it can be added at the preconditioner, so that the mechanical cooking extruder can still form chunks that do not break down into pieces.

Because of the physical characteristics required of the materials in order to be suitable for mechanical cooking extrusion, dry pet foods are inherently and generally much higher in dry grain or dry carbohydrate (e.g. potato / sweet potato) content, relative to other forms such as 'wet' (e.g. canned). As a result, and combined with the use of dry rendered animal proteins, dry foods historically have been lower in palatability.

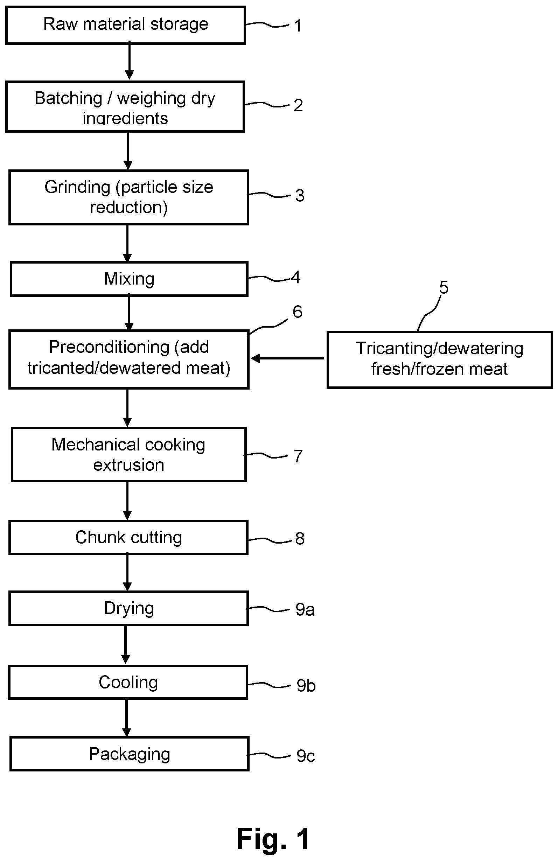

One example of a known dry pet food manufacturing process is shown in Fig. 1. The raw materials such as dried meat and vegetables are stored in a step 1, and they are weighed, ground, and mixed together in steps 2 to 4. Fresh or frozen meat is tricanted or dewatered in step 5, and added to the mixed dry ingredients in a preconditioning step 6. The mixture then passes through a mechanical cooking extruder in step 7, to provide strips which are die formed into chunks as described above in step 8, and dried, cooled, and packaged in steps 9a to 9c. The chunks final moisture content is typically in the range of 6 to 10%, and temperature less than 5°C of ambient. WO 2016/151440 A1 discloses a method of producing a food composition, the method comprising: forming a meat slurry from fresh or frozen meat; adding the meat slurry to a dry blend of ingredients to form a mixture in which the meat slurry is about 14% to about 30% of the mixture; subjecting the mixture to extrusion cooking to form an extrudate; and processing the extrudate to form the food composition, wherein the forming of the meat slurry comprises subjecting the fresh or frozen meat to size reduction and cooking the size-reduced fresh or frozen meat with direct steam injection at a temperature of about 71 °C or less.

It is an aim of the invention to incorporate non processed fresher meats (i.e. not dewatered, not decanted, nor triacanted) into a dry food manufacturing process to provide a higher quality (fresher, more palatable) pet food, whilst maintaining the packaging advantages, convenience, nutrient density and shelf life that dry food offers.

### SUMMARY OF THE INVENTION

According to the invention, there is provided a method of manufacturing a dry pet food as defined in claim 1. The method comprises receiving unprocessed meat, grinding the unprocessed meat, forming the ground meat into a slab or a plurality of strips, passing the formed meat through a steam cooker and cutting the meat into chunks, and drying out the chunks. The ground meat is mixed with less than 20% by weight dry ingredient prior to the forming of the ground meat and the dry ingredient into the slab or plurality of strips.

Since a steam cooker is used to cook the meat by steam and at lower temperature for longer when compared to the cooking that is done by a conventional mechanical cooking extruder, a higher quality product results, and a higher fresh meat content can be achieved due to the nature of the process. With use of the steam cooker, the meat does not undergo the higher temperature and harsher mechanical treatment that that occurs within a mechanical cooking extruder. Importantly the use of the steam cooker allows the material to be sourced directly from processors and abattoirs, and not via intermediaries i.e. renderers. The material is therefore fresher, of known provenance and quality and allows for a higher quality end product.

In addition, the steam cooker does not require the ground meat to have been subject to pre-processing e.g. dewatering, defatting by tricanting, or pressing, or other methods to reach the low moisture content that the mechanical cooking extruder requires, and so the fresh meat is presented in its 'whole' form. Said simply, the beneficial oils and nutrients within the moisture elements of the meat can be retained rather than needing to be removed as is required prior to presentation to a mechanical cooking extruder.

The steam cooking process is gentle, at lower temperature than a conventional mechanical cooking extruder and free of aggressive mechanical steps and sufficient to bind the meat together well enough for the subsequent drying process, so that the cut chunks will remain in their shapes and form rather than breaking down. Therefore, the meat is in its final constitution as it passes through the steam cooker, without any need to break down and re-constitute the meat neither during nor after the steam cooking has occurred.

Since the method begins with unprocessed (e.g. fresh or fresh frozen meat sourced directly from processing plant or abattoir), rather than dried meat like in known dry food manufacturing processes, the resulting product will be fresher and will have retained more of the nutrients that are typically lost during the known drying and subsequent storage processes. It also becomes possible to create dry food from a single, known source of meat (provenance), whereas meat drying processes (rendering) typically incorporate meats from many different agglomerated sources and the provenance, and freshness, and efficacy, source and provenance of the dried (rendered) meat in known dry food manufacturing processes cannot typically be determined. Furthermore, compared to the manufacture of dry pet foods in the traditional manner, the invention allows a greater deal of flexibility in the formulation of the pet food, and use of a higher fresh meat percentage.

The mixing of the ground meat with up to 20% by weight dry ingredient, prior to the forming of the ground meat with the dry ingredient, allows addition to the meat of some carbohydrates (if required), vitamin and mineral premixes, and/or nutraceuticals such as pre and pro-biotics, digestion aids or other micronutrients that may have a nutritional or marketing claim benefit. For example, the dry ingredient may comprise at least one of a dried vegetable and dried fruit preparation. There may be innumerable recipe permutations.

Conventionally, the gelatinisation of carbohydrates in the traditional mechanical cooking extruder prevents the chunks from breaking up during the traditional extrusion processing process, and so high levels of dried ingredients can be used in the mechanical cooking extruder. But, this gelatinisation effect does not occur and is not required when the mix is already in its final constitution prior to cooking, allowing very high percentages of greater than 80% unprocessed meat to be ground and included into the mix.

The step of grinding the unprocessed meat may comprise coarsely grinding the unprocessed meat(s), to allow it to be mixed with the dry ingredient component, and then finely grinding the mixture of the course ground meat and the dry ingredient, prior to the step of forming.

Preferably, the step of forming the ground meat is performed with an extruder that does not impart any significant heat to the ground meat through friction, shear or aggressive mechanical cooking forces. Then, the extruder does not degrade the quality of the meat. The formed meat that exits the extruder is preferably in an uncooked state, and so resembles a formed paste that will not break down into pieces, and which is subsequently cooked by the steam cooker.

The fresh meat former / extruder may produce a slab or a plurality of strips of the ground meat, typically in a paste consistency, to allow the steam cooker to cook the meat.

Preferably, the steam cooker cooks strips of meat rather than a slab of meat as then the surface area of the meat exposed to the steam is higher. Therefore, if the extruder produces a slab of meat, then the extruded meat may be passed through a slitter to form the batch into a plurality of strips prior to the steam cooker.

The meat is typically cut into the chunks after it has been cooked in the steam cooker, however it could alternatively be cut into chunks before the steam cooker if care was taken to prevent the chunks from coming into contact and sticking together before cooking had taken place. The cutting of the meat into chunks typically comprises cutting each strip into multiple separate lengths.

Preferably, the steam cooker comprises a conveyor belt configured to carry the slab, plurality of strips, or chunks, as the case may be, along and through a steam filled enclosure. Then, the uncooked meat can be continuously supplied to one side of the steam cooker, and the cooked meat continuously received from the other side of the steam cooker.

Once the product exits the steam cooker it is transferred via a transfer belt, these belts on some occasions have cooling assisted fans or water spray to aid cooling of the formed chunk, which in turn makes the product more robust, less fragile, less friable, and less prone to break up. The drying of the chunks preferably comprises reducing a moisture content of the chunks from greater than 40% by weight, to less than 12% (ideally 6 to 10%) by weight. Then, a high level of moisture is allowed in the uncooked meat so that fresh, unprocessed meat with all its oils/liquids and associated nutritional content can be used, and the dried chunks have a low level of moisture so that they can be easily packaged and handled, and by drying the end product will be bacteriologically safe.

The drying of the chunks may comprise a plurality of stages, including a first stage of outer skin hardening and a subsequent stage of full chunk drying. This allows for improved control and a stepped drying process to achieve the desired final target moisture. The first stage also makes the chunks sufficiently robust to stay in one piece when subjected to the subsequent stage(s) of drying, which are typically more intense.

The dried chunks may be coated or enrobed with liquid oil before packaging. This provides nutritional completeness, as well as further palatability benefits. Flavours, gravies or 'digests' may also be incorporated into the in addition to and after the liquid oil to improve the palatability and aroma appeal of the food to the pet. Typical pets for which the pet food is intended include animals such as cats or dogs.

There may also be a step of pasteurisation and / or sterilisation, prior to the packaging step.

### DETAILED DESCRIPTION

Embodiments of the invention will now be described by way of non-limiting example only and with reference to the accompanying drawings, in which:
Fig. 1 shows a flow diagram of a conventional dry food manufacturing process; and
Fig. 2 shows flow diagram of a dry food manufacturing process according to an embodiment of the invention.

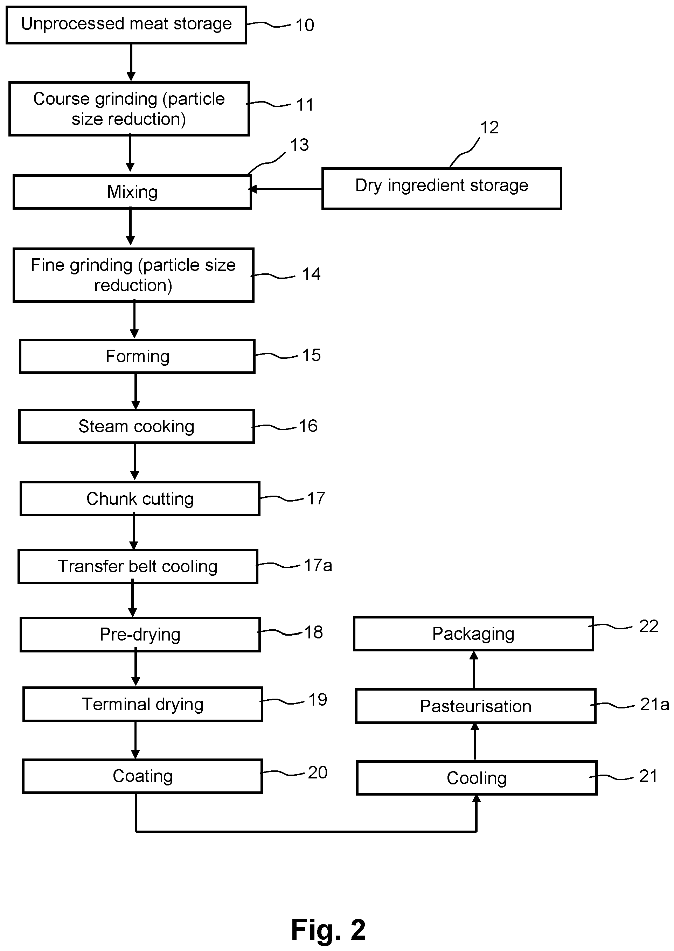

The flow diagram of Fig. 2 begins with a step 10 of storing unprocessed meat. The unprocessed meat is preferably fresh but could alternatively be frozen, and is in substantially the same constitution as originally taken from the relevant animal. The step 10 is preferably of short duration, dependant on whether the meat is fresh or frozen. For example, there is preferably less than 72 hours between the slaughter of the animal and the retrieval of the fresh meat from the storage for use in a subsequent grinding step 11. The grinding step 11 coarsely grinds the unprocessed meat so that is can be mixed with some dry ingredients in a mixing step 13. The dry ingredients are stored in a step 12, and in this embodiment comprise dried vegetable and or cereal / carbohydrate matter, but depending on the embodiment may also or alternatively comprise other dry ingredients such as dried fruits and / or other nutritional additives.

Once the coarsely ground meat and the dry ingredients have been mixed together, they pass through a fine grinding process (emulsification) or a fine mincing 14 to make the unprocessed meat into a pate' or paste type consistency. In a step 15, the mixture is formed into a plurality of strips by an extruder / former. In this embodiment, the extruder / former has a plurality of orifices which produce a corresponding plurality of sausage-like strips, but in an alternate embodiment the extruder may simply have a single rectangular orifice to produce a slab, and the slab may be followed by a series of blades in a row that is perpendicular to the direction of travel of the slab (known as a slitter), to cut the slab into the plurality of strips. The extruder / former does not exert any more frictional or shear forces on the mixture than necessary to create the slab / strips, and so no significant thermal heating of the mixture occurs when passing through the extruder / former, and the freshness of the ingredients in the mixture is not degraded, neither is the form of the sausage like strips. There is also no requirement to use an extruder to form the slabs / strips, but this is normally the most practical option for continuous processing. The extrusion unit is located immediately prior to the steam cooker, and its only function is to form the strips or slab of emulsion, ready for processing.

The slab / strips then enter the steam cooker which is used to heat the formed meat (emulsion). The formed meat mix is carried on a continuous belt through the steam cooker, which in this embodiment comprises a conveyer belt that conveys the slab / strips through an enclosure filled with steam, to perform steam cooking 16. The steam cooking 16 preferably raises the core temperature of the slab / strips from beneath 40 degrees centigrade to above 80 degrees centigrade, to cook the slab/strips. In this specific embodiment, the slab/strips enter the steam cooker at around +5°C, and are heated to around 92°C core temperature to cook them, with a process steam pressure of 3 bar.

Once the slab/strips have passed through the steam cooker, they are cut into chunks at step 17, to make them into a size that is suitable for the intended type of pet animal to eat. In an alternative embodiment, the slabs / strips are cut into chunks before passing through the steam cooker. The chunks exit the steam cooker/tunnel onto a transfer belt 17a, where air fans or water sprays may be used to help cool the chunks, or in some instances a very long transfer belt may be used to allow natural cooling. The transfer belt is a conveyor belt that transfers the chunks from the steam cooker and/or chunk cutter to the drying stages of the process.

The cut chunks pass to a step 18, where they are pre-dried in a first 'case hardening' drying process to form a hard skin that makes the chunks, less friable, more robust and less likely to break. The pre-dried chunks then pass into a subsequent drying process in step 19, where the chunks are fully dried so as to give an end chunk moisture of no greater than 10%. This subsequent drying process 19 may utilise vibration transport techniques based on the spiral elevator oven principle, or alternatively a conventional horizontal oven, as is known in the art, and the hard skin formed in the first drying process helps the chunks resist the forces present in the subsequent drying process to keep them from breaking. Further drying stages may also be implemented dependant on the final target moisture. The function of the drying step is simply to reduce the moisture level of the chunks to below 10%.

The dried chunks are then coated/enrobed with a liquid of fat/oil, for example chicken oil, salmon oil, or lamb tallow in a step 20. This helps to ensure nutritional adequacy, enhance palatability and provide a nutritional benefit. The liquid may for example be based on fat or oil or and may include liquid palatability enhancers, i.e. digests or 'gravies', to enhance the aromatic and palatability appeal of the chunks to the intended pet animal. The coated chunks are then left to cool in a step 21.

Then, there is a pasteurisation / sterilisation step 21a, in which the final product is heated to a high temperature of greater than the cooking temperature in the steam cooker, to kill any pathogens prior to packaging.

Finally, the dried and coated chunks are sieved to remove any fines or dust and finally packaged in a step 22, for example in plastic containers, such as pre-formed multi ply bags or sacks in preparation for their sale.

## Claims

1. A method of manufacturing a dry pet food, comprising receiving unprocessed meat, grinding (11,14) the unprocessed meat, forming (15) the ground meat into a slab or a plurality of strips, passing (16) the formed meat through a steam cooker and cutting (17) the meat into chunks, and drying out (18, 19) the chunks, wherein the method comprises mixing (13) the ground meat with less than 20% by weight dry ingredient prior to the forming (15) of the ground meat and the dry ingredient into the slab or plurality of strips.

2. The method of claim 1, wherein the dry ingredient comprises at least one of a dried vegetable, dried carbohydrate, dried cereal, or dried legume and dried fruit preparation.

3. The method of claim 1 or 2, wherein the step of grinding the unprocessed meat comprises coarsely grinding (11) the unprocessed meat, mixing (13) the coarsely ground meat with the dry ingredient, and finely grinding (14) the mixture of the course ground meat and the dry ingredient, prior to the step of forming (15).

4. The method of any preceding claim, wherein the step of forming (15) the ground meat is performed with an extruder that does not impart any significant heat to the ground meat through friction or shear forces, such that the formed meat is in an uncooked state.

5. The method of any preceding claim, wherein the cutting (17) of the meat into chunks is performed after the formed meat has passed through the steam cooker.

6. The method of any preceding claim, comprising cutting the slab into a plurality of strips prior to the steam cooking by using a slitter.

7. The method of any preceding claim, wherein the cutting (17) of the meat into chunks comprises cutting each strip into multiple separate lengths.

8. The method of any preceding claim, wherein the steam cooker comprises a conveyor belt configured to carry the slab, plurality of strips, or chunks, as the case may be, along and through a steam filled enclosure.

9. The method of any preceding claim, wherein chunks exit the steam cooker onto a transfer belt, and wherein air fans or water sprays directed towards the transfer belt are used to help cool (17a) the chunks prior to the step of drying the chunks.

10. The method of any preceding claim, wherein the drying of the chunks comprises reducing a moisture content of the chunks from greater than 60% by weight to less than 12% by weight.

11. The method of any preceding claim, wherein the drying of the chunks comprises a first stage of outer skin hardening (18) and a subsequent stage of full chunk drying (19).

12. The method of any preceding claim, wherein the formed meat comprises a moisture content of greater than 40% by weight, preferably greater than 60% by weight.

13. The method of any preceding claim, further comprising coating (20) the dried chunks with a liquid fat or oil.

14. The method of any preceding claim, further comprising packaging (22) the dried chunks into containers, for sale, and optionally pasteurising the dried chunks before the packaging.

## Patentansprüche

1. Verfahren zum Herstellen eines Haustier-Trockenfutters, umfassend Aufnehmen unverarbeiteten Fleischs, Wolfen (11, 14) des unverarbeiteten Fleischs, Formen (15) des gewolften Fleischs in eine Platte oder eine Mehrzahl von Streifen, Führen (16) des geformten Fleischs durch einen Dampfgarer und Schneiden (17) des Fleischs in Stücke, und Austrocknen (18, 19) der Stücke, wobei das Verfahren ein Mischen (13) des gewolften Fleischs mit weniger als 20 Gew.-% Trockenzutat vor dem Formen (15) des gewolften Fleischs und der Trockenzutat in die Platte oder die Mehrzahl von Streifen umfasst.

2. Verfahren gemäß Anspruch 1, wobei die Trockenzutat mindestens eines aus einem getrockneten Gemüse, einem getrockneten Kohlehydrat, einem getrockneten Getreideprodukt oder einer getrockneten Leguminose und einer getrockneten Fruchtzubereitung umfasst.

3. Verfahren gemäß Anspruch 1 oder 2, wobei der Schritt des Wolfens des unverarbeiteten Fleischs ein grobes Wolfen (11) des unverarbeiteten Fleischs, ein Mischen (13) des grob gewolften Fleischs mit der Trockenzutat und ein feines Wolfen (14) der Mischung des grob gewolften Fleischs und der Trockenzutat vor dem Schritt des Formens (15) umfasst.

4. Verfahren gemäß einem der vorhergehenden Ansprüche, wobei der Schritt des Formens (15) des gewolften Fleischs mit einem Extruder durchgeführt wird, der durch Reibung oder Scherungskräfte dem gewolften Fleisch keine erhebliche Wärme zuführt, sodass das geformte Fleisch in einem ungegarten Zustand ist.

5. Verfahren gemäß einem der vorhergehenden Ansprüche, wobei das Schneiden (17) des Fleischs in Stücke durchgeführt wird, nachdem das geformte Fleisch durch den Dampfgarer geführt wurde.

6. Verfahren gemäß einem der vorhergehenden Ansprüche, umfassend Schneiden der Platte in eine Mehrzahl von Streifen vor dem Dampfgaren unter der Verwendung eines Fleischschneiders.

7. Verfahren gemäß einem der vorhergehenden Ansprüche, wobei das Schneiden (17) des Fleischs in Stücke ein Schneiden eines jeden Streifens in mehrere getrennte Streifenstücke umfasst.

8. Verfahren gemäß einem der vorhergehenden Ansprüche, wobei der Dampfgarer ein Förderband umfasst, das dazu ausgelegt ist, gegebenenfalls die Platte, die Mehrzahl von Streifen oder die Stücke weiter und durch ein mit Dampf gefülltes Gehäuse zu transportieren.

9. Verfahren gemäß einem der vorhergehenden Ansprüche, wobei Stücke den Dampfgarer auf ein Transferband verlassen und wobei Lüfter oder Wassersprüheinrichtungen, die auf das Transferband gerichtet sind, dazu verwendet werden, zum Kühlen (17a) der Stücke vor dem Schritt des Trocknens der Stücke beizutragen.

10. Verfahren gemäß einem der vorhergehenden Ansprüche, wobei das Trocknen der Stücke ein Verringern des Feuchtegehalts der Stücke von mehr als 60 Gew.-% auf weniger als 12 Gew.-% umfasst.

11. Verfahren gemäß einem der vorhergehenden Ansprüche, wobei das Trocknen der Stücke eine erste Phase einer Härtung (18) einer äußeren Haut und eine darauf folgende Phase eines vollständigen Trocknens (19) der Stücke umfasst.

12. Verfahren gemäß einem der vorhergehenden Ansprüche, wobei das geformte Fleisch einen Feuchtegehalt von mehr als 40 Gew.-%, vorzugsweise von mehr als 60 Gew.-% umfasst.

13. Verfahren gemäß einem der vorhergehenden Ansprüche, ferner umfassend Beschichten (20) der getrockneten Stücke mit flüssigem Fett oder Öl.

14. Verfahren gemäß einem der vorhergehenden Ansprüche, ferner umfassend Verpacken (22) der getrockneten Stücke in Behälter zum Verkauf und optionales Pasteurisieren der getrockneten Stücke vor dem Verpacken.

## Revendications

1. Procédé de fabrication d'un aliment sec pour animaux de compagnie, comprenant la réception de viande non transformée, le hachage (11, 14) de la viande non transformée, le façonnage (15) de la viande hachée en une plaque ou une pluralité de bandes, le passage (16) de la viande façonnée dans un cuiseur à vapeur et le découpage (17) de la viande en morceaux, et le séchage (18, 19) des morceaux, lequel procédé comprend le mélange (13) de la viande hachée avec moins de 20 % en poids d'ingrédient sec avant le façonnage (15) de la viande hachée et de l'ingrédient sec en la plaque ou la pluralité de bandes.

2. Procédé selon la revendication 1, dans lequel l'ingrédient sec comprend au moins une parmi les préparations de légume séché, de protéine séchée, de céréale séchée, ou de légumineuse séchée et de fruit séché.

3. Procédé selon la revendication 1 ou 2, dans lequel l'étape de hachage de la viande non transformée comprend le hachage grossier (11) de la viande non transformée, le mélange (13) de la viande hachée grossièrement avec l'ingrédient sec, et finalement le hachage (14) du mélange de la viande hachée grossièrement et de l'ingrédient sec, avant l'étape de façonnage (15).

4. Procédé selon l'une quelconque des revendications précédentes, dans lequel l'étape de façonnage (15) de la viande hachée est effectuée au moyen d'une extrudeuse qui ne confère aucune chaleur significative à la viande hachée par l'intermédiaire de forces de frottement ou de cisaillement, si bien que la viande façonnée est dans un état non cuit.

5. Procédé selon l'une quelconque des revendications précédentes, dans lequel le découpage (17) de la viande en morceaux est effectué après que la viande façonnée est passée dans le cuiseur à vapeur.

6. Procédé selon l'une quelconque des revendications précédentes, comprenant le découpage de la plaque en une pluralité de bandes avant la cuisson à la vapeur par utilisation d'une découpeuse.

7. Procédé selon l'une quelconque des revendications précédentes, dans lequel le découpage (17) de la viande en morceaux comprend le découpage de chaque bande en multiples longueurs séparées.

8. Procédé selon l'une quelconque des revendications précédentes, dans lequel le cuiseur à vapeur comprend une courroie convoyeuse configurée pour porter la plaque, la pluralité de bandes, ou les morceaux, le cas échéant, le long et dans une enceinte remplie de vapeur.

9. Procédé selon l'une quelconque des revendications précédentes, dans lequel les morceaux sortent du cuiseur à vapeur sur une courroie de transfert, et dans lequel des ventilateurs ou des pulvérisateurs d'eau dirigés en direction de la courroie de transfert sont utilisés pour faciliter le refroidissement (17a) des morceaux avant l'étape de séchage des morceaux.

10. Procédé selon l'une quelconque des revendications précédentes, dans lequel le séchage des morceaux comprend la réduction de la teneur en humidité des morceaux de plus de 60 % en poids à moins de 12 % en poids.

11. Procédé selon l'une quelconque des revendications précédentes, dans lequel le séchage des morceaux comprend une première étape de durcissement de la peau extérieure (18) et une étape subséquente de séchage complet des morceaux (19).

12. Procédé selon l'une quelconque des revendications précédentes, dans lequel la viande façonnée comprend une teneur en humidité supérieure à 40 % en poids, de préférence supérieure à 60 % en poids.

13. Procédé selon l'une quelconque des revendications précédentes, comprenant en outre l'enrobage (20) des morceaux séchés avec une graisse liquide ou une huile.

14. Procédé selon l'une quelconque des revendications précédentes, comprenant en outre le conditionnement (22) des morceaux séchés dans des récipients, pour la vente, et éventuellement la pasteurisation des morceaux séchés avant le conditionnement.
